# FASCICULE DE BREVET EUROPEEN

(11) **EP 2 740 191 B1**
(45) Date de publication et mention de la délivrance du brevet: **07.10.2015**
(21) Numéro de dépôt: 12753762.9
(22) Date de dépôt: 27.07.2012
(51) Int. Cl.: H02J 4/00, B64C 25/40

(54) **DISPOSITIF D'ALIMENTATION ÉLECTRIQUE D'UN AÉRONEF AU SOL**
VORRICHTUNG ZUR VERSORGUNG EINES FLUGZEUGS AM BODEN MIT ELEKTRIZITÄT
DEVICE FOR SUPPLYING AN AIRCRAFT ON THE GROUND WITH ELECTRICITY

(30) Priorité: 04.08.2011 FR 1157169
(43) Date de publication de la demande: 11.06.2014
(73) Titulaire: Labinal Power Systems, 31700 Blagnac (FR); Turbomeca, 64510 Bordes (FR)
(72) Inventeur: VIEILLARD, Sébastien, F-77720 La Chapelle Gauthier (FR); BERENGER, Serge, F-94550 Chevilly Larue (FR); ROQUES, Serge, Thierry, F-31700 Cornebarrieu (FR); DAURIAC, Pascal, F-64110 Rontignon (FR)
(74) Mandataire: Pichat, Thierry
(86) Numéro de dépôt international: PCT/FR2012/051790
(87) Numéro de publication internationale: WO 2013/017789

(56) Documents cités:
- EP-A2- 1 897 804
- EP-A2- 2 236 419
- WO-A2-2009/125007
- FR-A1- 2 954 283

## Description

La présente invention concerne un dispositif d'alimentation électrique d'un aéronef au sol, comportant au moins deux réseaux électriques : un réseau électrique d'aéronef, notamment pour l'alimentation de la cabine et du cockpit de l'aéronef, et un réseau de taxiage électrique.

Les demandes FR 10/55457 et FR 10/59612 de la demanderesse décrivent respectivement un dispositif d'alimentation du réseau électrique d'un aéronef, et une architecture électrique pour le traitement de l'énergie régénérée par des actionneurs électriques pendant des opérations de taxiage d'un aéronef.

Le document EP 2 236 419 divulgue un dispositif d'alimentation électrique d'un aéronef au sol selon le préambule de la revendication 1.

Le taxiage d'un aéronef est la circulation ou le roulage de cet aéronef au sol, par l'intermédiaire des roues des trains d'atterrissage de l'aéronef. La taxiage est dit électrique lorsque les roues d'au moins un train d'atterrissage de l'aéronef (en général les roues des trains d'atterrissage principaux) sont entraînées par des moteurs électriques, qui font partie du réseau de taxiage.

Les réseaux d'aéronef et de taxiage sont alimentés par au moins un générateur entraîné par un groupe auxiliaire de puissance (ou APU, de l'anglais *Auxiliary Power Unit*)*.*

Dans la technique actuelle, ce groupe auxiliaire de puissance est mis en route par l'intermédiaire d'un démarreur indépendant alimenté par une batterie, et comprend un arbre de sortie d'entraînement du générateur précité.

Plusieurs architectures électriques ont été proposées pour l'alimentation des réseaux d'aéronef et de taxiage, à partir de l'énergie fournie par le groupe auxiliaire de puissance.

Une première architecture électrique de la technique antérieure comprend deux générateurs électriques entraînés par le groupe auxiliaire de puissance. Le premier générateur fournit une tension alternative Vac1 (230V) au réseau de taxiage et le second générateur fournit une tension alternative Vac2 (115V) au réseau d'aéronef. Le réseau de taxiage comprend un boîtier électronique de puissance (appelé MCU, de l'anglais *Motor Control Unit*) pour le pilotage des moteurs électriques d'entraînement des roues de l'aéronef, qui est relié au premier générateur par des moyens de connexion/déconnexion.

L'avantage de cette architecture est que les réseaux de taxiage et d'aéronef sont indépendants l'un de l'autre et sont alimentés par des générateurs distincts. Les contraintes de validation pour la certification du réseau de l'aéronef (du type ATA 24) n'affectent donc pas le réseau de taxiage, qui peut comprendre un boîtier électronique de puissance simplifié, ce qui réduit la masse de ce boîtier (d'environ 50kg).

Toutefois, les deux générateurs précités ont des puissances électriques relativement importantes, respectivement de 120kVA et de 90kVA, qui s'ajoutent à la puissance électrique du démarreur du groupe auxiliaire de puissance. La puissance électrique embarquée dans l'aéronef est donc relativement importante. Du fait de leurs fortes puissances électriques, les générateurs sont lourds et encombrants, et il peut être difficile voire impossible de les monter sur l'arbre de sortie du groupe auxiliaire de puissance.

Dans une seconde architecture électrique de la technique antérieure, les réseaux d'aéronef et de taxiage sont alimentés par un générateur commun de forte puissance électrique (150kVA), qui est entraîné par le groupe auxiliaire de puissance. Ce générateur fournit une tension alternative Vac2 (115V) aux réseaux d'aéronef et de taxiage, qui sont reliés au générateur par des moyens de connexion/déconnexion. Le réseau de taxiage comprend un boîtier électronique de puissance relié aux moteurs électriques d'entraînement des roues de l'aéronef.

L'inconvénient de cette architecture électrique est que le réseau de taxiage doit répondre à l'ensemble des normes réseaux (du type ATA24 par exemple) applicables à l'aéronef et est alimenté par la tension Vac2 de 115V. Le boîtier électronique de puissance du réseau de taxiage comprend une fonction de conversion d'énergie permettant d'augmenter le niveau de tension sans polluer le réseau de l'aéronef. Cette fonction est en général assurée par un module ATRU (*Auto Transformer Rectifier Unit),* ce qui entraîne une augmentation significative du poids du boîtier (de l'ordre de 50 à 100kg).

On a également proposé, dans une autre architecture électrique connue, d'alimenter le réseau de taxiage d'un aéronef au moyen d'au moins un générateur entraîné par un moteur de l'aéronef, le réseau électrique d'aéronef étant alimenté par un autre générateur entraîné par un groupe auxiliaire de puissance. Cependant, cette architecture oblige à faire fonctionner un moteur, ce qui entraîne une réduction significative des gains de consommation en kérosène attendus pour la fonction taxiage électrique d'un aéronef.

L'invention a notamment pour but de réduire ou d'éliminer de façon simple, efficace et économique au moins une partie des inconvénients précités de la technique antérieure, grâce à une nouvelle architecture électrique pour le taxiage électrique d'un aéronef.

Elle propose à cet effet un dispositif d'alimentation électrique d'un aéronef au sol, comportant deux générateurs électriques entraînés par un groupe auxiliaire de puissance, le premier générateur étant destiné à alimenter un réseau de taxiage électrique comprenant des moteurs électriques d'entraînement de roues de l'aéronef, et le second générateur étant destiné à alimenter un réseau électrique d'aéronef, caractérisé en ce que le premier générateur est relié par des moyens de connexion/déconnexion sélective aux réseaux d'aéronef et de taxiage, pour fournir une première tension alternative Vac2 au réseau d'aéronef lorsqu'il est connecté à ce réseau, ou une tension alternative plus importante Vac1 ou une puissance P au réseau de taxiage lorsqu'il est connecté à ce réseau, et en ce que le second générateur est relié par des moyens de connexion/déconnexion au réseau d'aéronef pour fournir à ce réseau ladite tension alternative Vac2 uniquement quand le premier générateur alimente le réseau de taxiage.

Dans le dispositif selon l'invention, le premier générateur entrainé par le groupe auxiliaire de puissance est utilisé pour alimenter le réseau de taxiage lorsque l'aéronef doit rouler au sol, et pour alimenter le réseau d'aéronef lorsque le réseau de taxiage n'est pas alimenté. Ce premier générateur dit « hybride » est capable de fournir sélectivement une tension Vac1 d'alimentation du réseau de taxiage ou une tension Vac2 d'alimentation du réseau d'aéronef. En variante, le premier générateur peut fournir sélectivement une puissance P d'alimentation du réseau de taxiage, ou une tension Vac2 d'alimentation du réseau d'aéronef. Le second générateur est utilisé pour alimenter le réseau d'aéronef lorsque le premier générateur alimente le réseau de taxiage électrique. Ce deuxième générateur est avantageusement dimensionné pour fournir uniquement des besoins à l'avion au sol, ce qui permet de réduire la puissance électrique embarquée et donc le volume installé dans l'avion. Les moyens de connexion/déconnexion sont pilotés pour relier, pendant le taxiage, le premier générateur au réseau de taxiage (pour son alimentation en tension Vac1 ou en puissance P) et le second générateur au réseau d'aéronef (pour son alimentation en tension Vac2), et pour relier, pendant les autres phases de fonctionnement de l'aéronef, le premier générateur au réseau d'aéronef pour son alimentation en tension Vac2, le second générateur étant alors à l'arrêt.

L'invention permet ainsi de concevoir le réseau de taxiage sans les contraintes imposées par les normes applicables au réseau propre à l'aéronef du type ATA 24 et de réduire les contraintes de pollution harmonique associée à la fonction taxiage.

Selon une autre caractéristique de l'invention, un des deux générateurs est un générateur/démarreur apte à démarrer le groupe auxiliaire de puissance et peut remplacer ainsi le démarreur indépendant utilisé dans la technique antérieure, ce qui représente un gain de poids significatif. De plus, ce générateur/démarreur est monté sur le groupe auxiliaire de puissance à la place du démarreur (c'est-à-dire sur le pignon du groupe généralement dédié au démarreur de la technique antérieure) et ne gêne donc pas le montage de l'autre générateur sur l'arbre de sortie du groupe auxiliaire de puissance.

Le dispositif selon l'invention comprend également un boîtier électronique de puissance qui est relié au générateur/démarreur pour le pilotage du démarrage du groupe auxiliaire de puissance. Ce boîtier peut comprendre des moyens de commande du type GCU (de l'anglais *Generator Control Unit*) qui régulent le courant ou la tension de sortie du générateur/démarreur et le protègent en cas de surcharge électrique.

Le premier générateur est de préférence un générateur synchrone à trois étages à excitation rotorique bobinée. La variation de l'excitation rotorique permet soit de faire varier la tension de sortie du générateur, entre les valeurs Vac1 et Vac2, soit de passer d'un générateur de tension (délivrant une tension alternative Vac2 sensiblement constante) à un générateur de courant/puissance délivrant un courant ou une puissance, en fonction du besoin de taxiage sensiblement constant, par exemple une puissance de 150kW.

Le premier générateur peut fournir une tension de 115Vac(Vac2) et une puissance de 90kVA lorsqu'il est connecté au réseau d'aéronef ou une tension de 230Vac(Vac1) et une puissance de 150kW (cas d'un générateur régulé en tension ou en puissance) lorsqu'il est connecté au réseau de taxiage.

Le second générateur peut fournir une puissance électrique comprise entre 30 et 40 kVA, et une tension Vac1 de 115V à 400Hz. La puissance électrique embarquée dans l'aéronef pour son fonctionnement au sol est donc nettement inférieure à celle utilisée dans la technique antérieure, décrite ci-dessus (120 à 130 kVA, contre 210 kVA dans la technique antérieure). Par ailleurs, du fait de sa faible puissance électrique, le second générateur est peu encombrant et peut être entraîné avec le premier générateur par l'arbre de sortie du groupe auxiliaire de puissance.

La présente invention concerne également un procédé d'alimentation électrique d'un aéronef au sol, au moyen d'un dispositif tel que décrit ci-dessus, caractérisé en ce qu'il comprend une étape consistant à alimenter le réseau de taxiage au moyen du premier générateur et le réseau d'aéronef au moyen du second générateur, et une étape consistant à alimenter le réseau d'aéronef au moyen du premier générateur quad la fonction de taxiage n'est pas utilisée, le second générateur étant alors hors service.

Avantageusement, le premier générateur est un générateur synchrone à trois étages à excitation rotorique bobinée, et l'excitation de ce générateur est commandée par un boîtier électronique de puissance pour passer d'un générateur de tension Vac1 à un générateur de tension Vac2 ou d'un générateur de puissance P à un générateur de tension Vac2.

L'invention sera mieux comprise et d'autres caractéristiques, détails et avantages de celle-ci apparaîtront plus clairement à la lecture de la description qui suit, faite à titre d'exemple non limitatif et en référence aux dessins annexés, dans lesquels :
- les figures 1 et 2 représentent chacune de manière schématique un dispositif d'alimentation électrique d'un aéronef selon la technique antérieure ;
- la figure 3 représente de manière schématique un dispositif d'alimentation électrique d'un aéronef selon la présente invention ;
- la figure 4 représente de manière schématique un générateur synchrone à trois étages à excitation rotorique bobinée selon l'invention ; et
- les figures 5 et 6 représentent de manière schématique des variantes de réalisation du dispositif d'alimentation électrique selon l'invention.

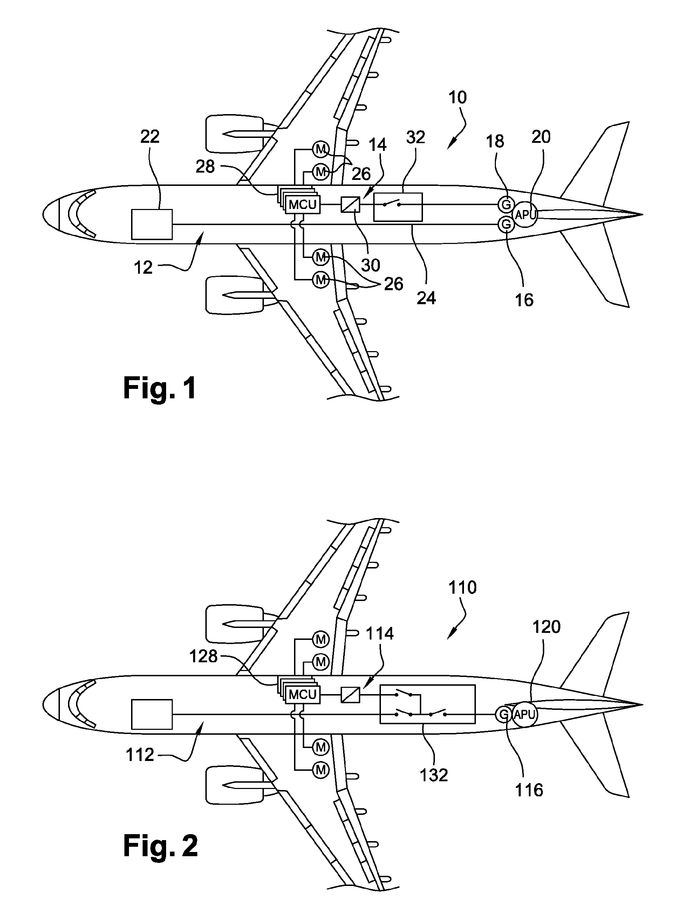

On se réfère d'abord à la figure 1 qui représente un aéronef équipé d'un dispositif 10 de la technique antérieure pour l'alimentation électrique d'un réseau 12 d'aéronef, notamment pour l'alimentation d'équipements des cabines de pilotage et des passagers de l'aéronef, et d'un réseau 14 de taxiage électrique.

Chaque réseau 12, 14 est alimenté par un générateur électrique 16, 18 entraîné par un groupe auxiliaire de puissance 20, désigné par l'acronyme APU (*Auxiliary Power Unit)* dans ce qui suit.

L'APU 20 est situé à l'arrière du fuselage de l'aéronef et comprend un arbre de sortie (non représenté) d'entraînement des rotors des générateurs 16, 18. L'APU 20 est équipé d'un démarreur (non représenté) indépendant, qui est relié à une batterie et à des moyens de pilotage du démarrage de l'APU.

Le générateur 16 a une puissance électrique de 90kVA et fournit une tension alternative Vac2 de 115v au réseau 12, ce dernier étant schématiquement représenté en figure 1 par un boîtier de distribution primaire 22 reliée par un harnais électrique 24 au générateur 16.

Le générateur 18 a une puissance électrique de 120kVA et fournit une tension alternative Vac1 de 230v au réseau de taxiage 14, qui est schématiquement représenté par quatre moteurs (M) 26, reliés à un boîtier électronique de puissance (MCU, de l'anglais *Motor Control Unit)* 28, qui est lui-même relié par un redresseur 30 au générateur 18. La sortie du générateur 18 est reliée au réseau de taxiage 14 par des moyens 32 de connexion/déconnexion qui permettent d'isoler le générateur du réseau de taxiage 14 lorsque la fonction taxiage n'est pas recherchée, par exemple lorsque l'aéronef est en vol.

Cette architecture électrique présente les inconvénients décrits plus haut, qui sont principalement dus aux puissances électriques relativement importantes des générateurs 16, 18 (respectivement de 90kVA et de 120kVA), à leur poids et à leur encombrement.

La figure 2 représente un aéronef équipé d'un autre dispositif 110 de la technique antérieure pour l'alimentation électrique du réseau 112 d'aéronef et du réseau de taxiage 114.

Les réseaux 112, 114 sont alimentés par un générateur électrique commun 116 qui est entraîné par un APU 120.

La sortie du générateur 116 est reliée aux réseaux 112, 114 par des moyens 132 de connexion/déconnexion et fournit à ces réseaux une tension alternative Vac2 de 115v.

Le boîtier électronique de puissance (MCU) 128 du réseau de taxiage 114 comprend un module ATRU *(Auto Transformer Rectifier Unit)* de conversion d'énergie permettant d'augmenter le niveau de tension fourni par le générateur 116.

Cette autre architecture électrique présente également des inconvénients, qui sont principalement dus au fait que le module ATRU entraîne une augmentation significative du poids du boîtier électronique de puissance (MCU) 128, et que le réseau de taxiage 114 doit répondre à l'ensemble des standards de certification applicables au réseau 112 d'aéronef 12 (du type ATA 24).

L'invention permet de remédier à au moins une partie des inconvénients des techniques antérieures grâce à l'alimentation du réseau de taxiage et du réseau propre à l'aéronef au moyen de deux générateurs, dont un est « hybride » et permet d'alimenter de façon sélective ces deux réseaux.

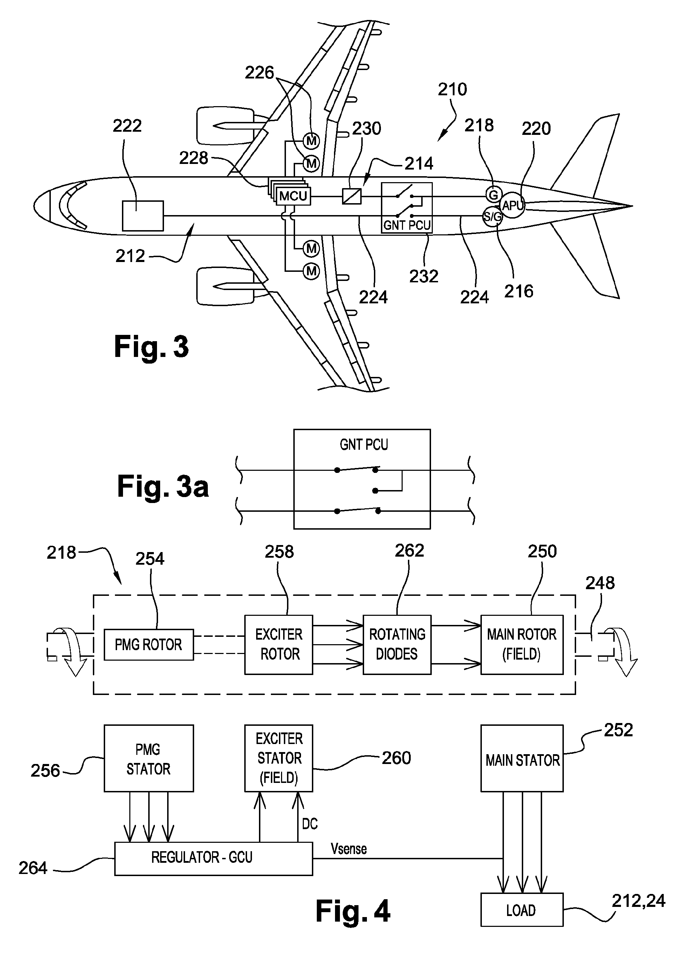

La figure 3 représente un mode préféré de réalisation du dispositif 210 selon l'invention, dans lequel un APU 220, situé à l'arrière du fuselage d'un aéronef, entraîne les rotors de deux générateurs électriques 216, 218 indépendants.

La sortie du générateur 216 est reliée par des moyens 232 de connexion/déconnexion à l'entrée d'un boîtier de distribution primaire 222 du réseau d'aéronef, la ou les sorties de ce boîtier 222 étant par exemple reliées à des équipements du cockpit et à différents compartiments du fuselage de l'aéronef. Les liaisons électriques entre le boîtier 222, les moyens 232 et le générateur 216 sont établies par des harnais électriques 224.

Le générateur 216 a une puissance électrique comprise entre 30 et 40kVA et fournit au réseau 212 d'aéronef une tension alternative Vac2, qui est par exemple de 115V à 400Hz.

La sortie du générateur 218 est reliée par des moyens 232 de connexion/déconnexion à l'entrée d'un redresseur 230 du réseau de taxiage, la sortie du redresseur 230 étant reliée à l'entrée d'un boîtier électronique de puissance (MCU) 228 qui alimente des moteurs 226 d'entraînement des roues des trains d'atterrissage principaux de l'aéronef. Ces moteurs 226 peuvent être au nombre de quatre.

Dans l'exemple représenté, les moyens 232 de connexion/déconnexion des générateurs 216, 218 aux réseaux 212, 214 sont formés par un boîtier GNTPCU (*Green Taxiing Power Control Unit)* commun comportant des contacteurs ou analogues aptes à établir des liaisons électriques entre le générateur 218 et le réseau de taxiage 214, entre le générateur 218 et le réseau d'aéronef 212, et entre le générateur 216 et le réseau d'aéronef 212. Le boîtier GNTPCU permet de gérer les configurations électriques de l'aéronef au moyen des contacteurs et comprend en outre au moins une carte du type GCU (*Generator Control Unit*) pour piloter l'excitation du générateur 218, comme cela sera décrit dans ce qui suit.

Le générateur 218 a une puissance électrique de l'ordre de 90kVA par exemple et est apte à alimenter le réseau de taxiage 214 et le réseau d'aéronef 212.

Lorsque la fonction taxiage n'est pas utilisée, la sortie du générateur 218 est reliée par les moyens 232 au réseau d'aéronef 212 et fournit à ce réseau une tension alternative Vac2, qui est par exemple de 115v à 400Hz. La sortie du générateur 218 est déconnectée du réseau de taxiage 214 par l'intermédiaire des moyens 232. La sortie du générateur 216 peut également être déconnectée du réseau 212 par l'intermédiaire des moyens 232. Les contacteurs du boîtier GNTPCU sont alors dans les positions telles que représentées dans la figure 3.

Lorsque la fonction taxiage doit être utilisée, la sortie du générateur 216 est reliée par les moyens 232 au réseau d'aéronef 212 et fournit à ce réseau une tension alternative Vac2, qui est par exemple de 115v à 400Hz. La sortie du générateur 218 est reliée par les moyens 232 au réseau de taxiage 214 et fournit à ce réseau une tension alternative Vac1, qui est par exemple de 230v à 400Hz, ou une puissance P, qui est par exemple de 150kW à 230v. Les contacteurs du boîtier GNTPCU sont alors dans les positions telles que représentées dans la figure 3a.

Le redresseur 230 est du type AC/DC et permet de convertir la tension alternative Vac1 en tension continue Vdc1. Le boîtier MCU 228 peut comprendre des contacteurs et au moins un convertisseur d'énergie comportant chacun un ou plusieurs onduleurs. De façon avantageuse, ces onduleurs fonctionnent simplement en mode aiguilleur de courant lorsque le générateur 218 fournit un courant ou une puissance au réseau de taxiage 214.

Le générateur 216 est de préférence un générateur/démarreur (S/G), qui peut être utilisé en mode « moteur » quand on lui fournit de l'énergie, pour démarrer l'APU 220. Ceci permet de supprimer le démarreur qui était dédié au démarrage de l'APU dans la technique antérieure. Le générateur 216 de faible puissance est monté sur l'APU 220 à la place du démarreur d'origine, ce qui permet de ne pas gêner l'implantation du générateur 218 sur l'arbre de sortie de l'APU 220.

En variante, c'est le générateur 218 qui est utilisé pour démarrer l'APU 220. Le générateur 218, qui est apte à fournir de façon sélective deux tensions Vac1 et Vac2 ou une tension Vac2 et une puissance P, est avantageusement un générateur synchrone à trois étages à excitation rotorique bobinée, dont le principe de fonctionnement est schématiquement représenté en figure 4.

Le générateur 218 comporte un rotor principal bobiné 250 entraîné par l'arbre de sortie 248 de l'APU à l'intérieur d'un stator principal bobiné 252. Le générateur 218 est du type à trois étages (trois ensembles rotor/stator) et comprend en plus de l'ensemble rotor principal 250 / stator principal 252, un rotor 254 et un stator 256 à aimants permanents et un rotor 258 et un stator 260 d'une excitatrice, les rotors 254, 258 à aimants permanents et de l'excitatrice étant solidaires de l'arbre de sortie 248 de l'APU.

La sortie du rotor 258 de l'excitatrice est reliée à l'entrée d'un redresseur à diodes 262, qui est solidaire de l'arbre 248, et dont la sortie est reliée à l'entrée du rotor principal 250.

L'entrée du stator 260 de l'excitatrice et la sortie du stator 256 à aimants permanents sont reliées à des moyens 264 de régulation et de commande comportant au moins une carte GCU qui régule le courant ou la tension du générateur 218 et le protège en cas de surcharge électrique. Ces moyens 264 sont également reliés à la sortie du stator principal 252 et comprennent des moyens de détection de la tension ou du courant délivré aux réseaux 212, 214 de l'aéronef. Les moyens 264 peuvent être logés dans le boîtier GNTPCU.

Le générateur 218 peut ainsi fonctionner de la façon suivante.

L'arbre de sortie 248 de l'APU 220 entraîne le rotor principal 250 du générateur 218 à une vitesse prédéterminée. Les moyens 264 de régulation et de commande régulent l'alimentation du stator 260 de l'excitatrice de façon à générer un champ magnétique induisant un courant dans le rotor 258 de l'excitatrice, ce courant sortant du rotor 258 et étant redressé par le redresseur 262 avant d'alimenter le rotor principal 250 pour induire une tension ou un courant donné dans le stator principal 252 du troisième étage du générateur. Le rotor 254 et le stator 256 à aimants permanents permettent notamment de signaler aux moyens 264 la vitesse de rotation de l'arbre 248.

Le rotor principal 250 induit un courant ou une tension dans le stator principal 252 qui est destiné à alimenter l'un ou l'autre des réseaux 212, 214 précités. Les moyens 264 pilotent l'excitation du générateur 218 en fonction de la tension ou du courant détecté en sortie de ce générateur, de façon à ce que ce dernier délivre une tension définie (VAc1 ou Vac2) sensiblement constante ou possiblement variable pour alimenter notamment le réseau de taxiage et soit assimilable à un générateur de tension, ou délivre un courant ou une puissance sensiblement constant et soit assimilable à un générateur de courant/puissance pour alimenter notamment le réseau de taxiage.

La variation de l'excitation du générateur 218 permet de passer d'un mode de régulation de tension Vac2 (pour l'alimentation du réseau 212 en Vac2, par exemple de 115V) à un mode de régulation de puissance P (pour l'alimentation du réseau 214 en puissance P, par exemple de 150kW), ou d'un mode de régulation de tension Vac2 (pour l'alimentation du réseau 212 en Vac2, par exemple de 115V) à un mode de régulation de tension Vac1 (pour l'alimentation du réseau 214 en tension Vac1, par exemple de 230V).

Le générateur 218 fournit de préférence une tension de 115Vac et une puissance de 90kVA lorsqu'il est connecté au réseau d'aéronef, et une puissance de 150KW lorsqu'il est connecté au réseau de taxiage.

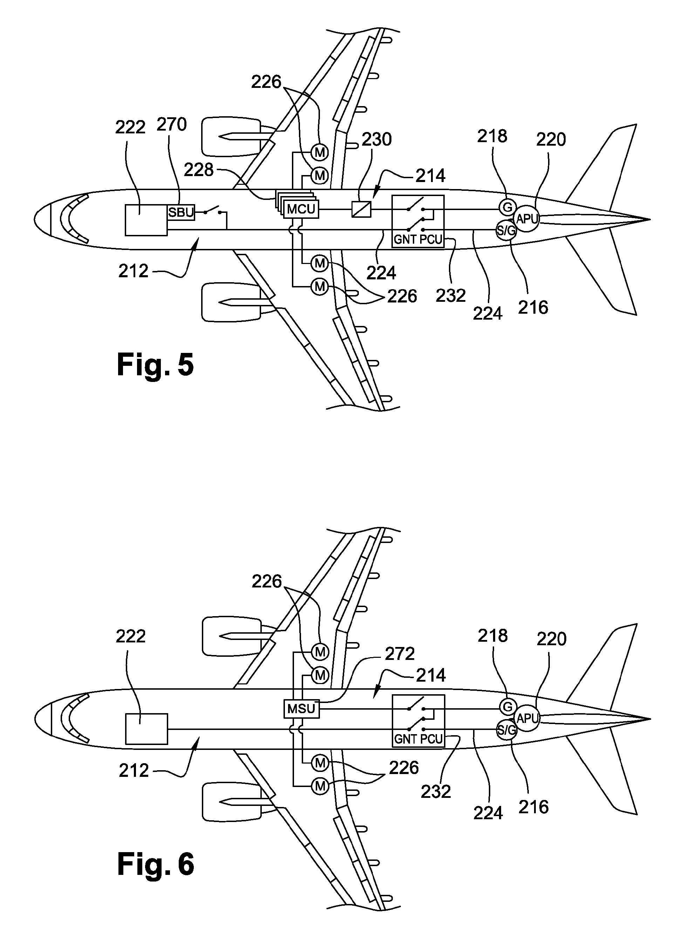

Dans la variante de réalisation de la figure 5, un boîtier électronique de puissance 270 du type SBU (*Starter Box Unit*) est branché sur le harnais 224, en parallèle du boîtier 222. Ce boîtier 270 est utilisé pour piloter le démarrage de l'APU 220 par l'intermédiaire du générateur/démarreur 216 ou 218. Dans ce cas, les logiques de pilotage des contacteurs du boîtier GNTPCU (moyens 232) peuvent être adaptées en conséquence.

La variante de réalisation de la figure 6 diffère de celle de la figure 4 en ce que le boîtier MCU est remplacé par un boîtier MSCU ou MSU 272 (*Motor Starter Unit*)*.* Ce boîtier MSU 272 intègre une partie de l'électronique de puissance du boîtier GNTPCU pour piloter le démarrage de l'APU 220 par l'intermédiaire du générateur/démarreur 216 ou 218.

Le système électrique de démarrage de l'APU qui est utilisé dans la présente invention peut être du type de celui décrit dans la demande WO-A2-2010/079308 de la demanderesse

Dans encore une autre variante non représentée, le réseau de taxiage comprend un nombre de moteurs (M) 226 différent de quatre, et par exemple de deux.

## Revendications

1. Dispositif (210) d'alimentation électrique d'un aéronef au sol, comportant deux générateurs électriques (216, 218) entraînés par un groupe auxiliaire de puissance (220), le premier générateur étant destiné à alimenter un réseau (214) de taxiage électrique comprenant des moteurs électriques (226) d'entraînement de roues de l'aéronef, et le second générateur étant destiné à alimenter un réseau électrique (212) d'aéronef, **caractérisé en ce que** le premier générateur est relié par des moyens de connexion/déconnexion sélective (232) aux réseaux d'aéronef et de taxiage, et est apte à fournir une première tension alternative (Vac2) au réseau d'aéronef lorsqu'il est connecté à ce réseau, ou une seconde tension alternative supérieure à la première tension alternative (Vac1) ou une puissance d'alimentation (P) du réseau de taxiage lorsqu'il est connecté à ce réseau, et **en ce que** le second générateur est relié par des moyens de connexion/déconnexion (232) au réseau d'aéronef pour fournir à ce réseau la première tension alternative (Vac2) uniquement quand le premier générateur alimente le réseau de taxiage électrique de l'aéronef.

2. Dispositif selon la revendication 1, **caractérisé en ce que** l'un des générateurs (216, 218) est un générateur/démarreur apte à démarrer le groupe auxiliaire de puissance (220).

3. Dispositif selon la revendication 2, **caractérisé en ce qu'**il comprend un boîtier électronique de puissance (228, 270, 272) relié au générateur/démarreur (216, 218) pour le pilotage du démarrage du groupe auxiliaire de puissance (220).

4. Dispositif selon l'une des revendications précédentes, **caractérisé en ce que** le premier générateur (218) est un générateur synchrone à trois étages à excitation rotorique bobinée.

5. Dispositif selon l'une des revendications précédentes, **caractérisé en ce que** le premier générateur (218) fournit une tension de 115Vac(Vac2) à 400Hz et une puissance de 90kVA lorsqu'il est connecté au réseau d'aéronef.

6. Dispositif selon l'une des revendications précédentes, **caractérisé en ce que** le premier générateur (218) fournit une puissance de 150kW lorsqu'il est connecté au réseau de taxiage.

7. Dispositif selon l'une des revendications précédentes, **caractérisé en ce que** le second générateur (216) fournit une puissance électrique comprise entre 30 et 40 kVA, et une tension Vac1 de 115Vac à 400Hz.

8. Procédé d'alimentation électrique d'un aéronef au sol au moyen d'un dispositif (210) selon l'une des revendications précédentes, **caractérisé en ce qu'**il comprend une étape consistant à alimenter le réseau de taxiage (214) par le premier générateur (218) et le réseau d'aéronef (212) au moyen du second générateur (216) et une étape consistant à alimenter le réseau d'aéronef (212) au moyen du premier générateur (218) quand la fonction de taxiage n'est pas utilisée, le second générateur (216) étant alors hors service.

9. Procédé selon la revendication 8, **caractérisé en ce que** le premier générateur (218) est un générateur synchrone à trois étages à excitation rotorique bobinée, et **en ce que** l'excitation de ce générateur est commandée par un boîtier électronique de puissance (232) pour passer d'un second générateur de tension alternative (Vac1) à un premier générateur de tension alternative (Vac2), la tension en sortie du sécond générateur étant supérieure à la tension en sortie du premier générateur, ou d'un générateur de puissance (P) à un premier générateur de tension alternative (Vac2).

## Patentansprüche

1. Vorrichtung (210) zur elektrischen Versorgung eines Luftfahrzeugs am Boden, enthaltend zwei elektrische Generatoren (216, 218), die über ein Hilfstriebwerk (220) angetrieben werden, wobei der erste Generator dazu bestimmt ist, ein elektrisches Taxiing-Netz (214) zu versorgen, das Elektromotoren (226) zum Antreiben der Räder des Luftfahrzeugs aufweist, wobei der zweite Generator dazu bestimmt ist, ein elektrisches Luftfahrzeug-Netz (21) zu versorgen, **dadurch gekennzeichnet, dass** der erste Generator über Mittel (232) zum selektiven Verbinden/Trennen mit dem Luftfahrzeug- und dem Taxiing-Netz verbunden ist und dazu geeignet ist, eine erste Wechselspannung Vac2 für das Luftfahrzeug-Netz dann bereitzustellen, wenn er mit diesem Netz verbunden ist, bzw. eine höhere Wechselspannung Vac1 oder eine Leistung P für das Taxiing-Netz dann bereitzustellen, wenn er mit diesen Netz verbunden ist, und dass der zweite Generator über Mittel (232) zum selektiven Verbinden/Trennen mit dem Luftfahrzeug-Netz verbunden ist, um diesem Netz die erste Wechselspannung Vac2 nur dann bereitzustellen, wenn der erste Generator das elektrische Taxiing-Netz des Luftfahrzeugs versorgt.

2. Vorrichtung nach Anspruch 1, **dadurch gekennzeichnet, dass** einer der Generatoren (216, 218) ein Generator/Starter ist, der dazu geeignet ist, das Hilfstriebwerk (220) zu starten.

3. Vorrichtung nach Anspruch 2, **dadurch gekennzeichnet, dass** sie ein elektronisches Leistungsgehäuse (228, 270, 272) aufweist, das mit dem Generator/Starter (216, 218) zum Steuern des Starts des Hilfstriebwerks (220) verbunden ist.

4. Vorrichtung nach einem der vorangehenden Ansprüche, **dadurch gekennzeichnet, dass** der erste Generator (218) ein dreistufiger Synchrongenerator mit Rotorerregerwicklung ist.

5. Vorrichtung nach einem der vorangehenden Ansprüche, **dadurch gekennzeichnet, dass** der erste Generator (218) eine Spannung von 115 Vac (Vac2) bei 400 Hz und eine Leistung von 90 kVA dann bereitstellt, wenn er an das Luftfahrzeug-Netz angeschlossen ist.

6. Vorrichtung nach einem der vorangehenden Ansprüche, **dadurch gekennzeichnet, dass** der erste Generator (218) eine Leistung von 150 kW dann bereitstellt, wenn er an das Taxiing-Netz angeschlossen ist.

7. Vorrichtung nach einem der vorangehenden Ansprüche, **dadurch gekennzeichnet, dass** der zweite Generator (216) eine elektrische Leistung zwischen 30 und 40 kVA und eine Spannung Vac1 von 115Vac bei 400 HZ bereitstellt.

8. Verfahren zur elektrischen Versorgung eines Luftfahrzeugs am Boden mittels einer Vorrichtung (210) nach einem der vorangehenden Ansprüche, **dadurch gekennzeichnet, dass** es einen Schritt umfasst, der darin besteht, das Taxiing-Netz (214) über den ersten Generator (218) und das Luftfahrzeug-Netz (212) über den zweiten Generator (216) zu versorgen, sowie einen Schritt, der darin besteht, das Luftfahrzeug-Netz (212) mittels des ersten Generators (218) dann zu versorgen, wenn die Taxiing-Funktion nicht verwendet wird, wobei der zweite Generator (216) dann außer Betrieb ist.

9. Verfahren nach Anspruch 8, **dadurch gekennzeichnet, dass** der erste Generator (218) ein dreistufiger Synchrongenerator mit Rotorerregerwicklung ist und dass die Erregung dieses Generators über ein elektronisches Leistungsgehäuse (232) gesteuert wird, um von einem Generator der Spannung Vac1 zu einem Generator der Spannung Vac2 oder von einem Generator der Leistung P zu einem Generator der Spannung Vac2 überzugehen.

## Claims

1. An electrical power supply device (210) for an aircraft on the ground, the device comprising two electricity generators (216, 218) driven by an auxiliary power unit (220), the first generator being for powering an electrical taxiing network (214) including electric motors (226) for driving wheels of the aircraft, and the second generator being for powering an aircraft electricity network (212), the power supply device being **characterized in that** the first generator is connected by selective connection/disconnection means (232) to the aircraft and taxiing networks, and is suitable for delivering a first AC voltage (Vac2) to the aircraft network when it is connected to that network, or a second AC voltage (Vac1), higher than the first AC voltage (Vac2) or a power supply (P) to the taxiing network when it is connected to that network, and **in that** the second generator is connected by connection/disconnection means (232) to the aircraft network in order to deliver the first AC voltage (Vac2) to that network solely when the first generator is powering the electrical taxiing network of the aircraft.

2. A device according to claim 1, **characterized in that** one of the generators (216, 218) is a starter/generator suitable for starting the auxiliary power unit (220).

3. A device according to claim 2, **characterized in that** it includes an electronic power unit (228, 270, 272) connected to the starter/generator (216, 218) for controlling the starting of the auxiliary power unit (220).

4. A device according to any preceding claim, **characterized in that** the first generator (218) is a three-stage synchronous generator with wound rotor excitation.

5. A device according to any preceding claim, **characterized in that** the first generator (218) delivers a voltage of 115 Vac (Vac2) at 400 Hz and at a power of 90 kVA when it is connected to the aircraft network.

6. A device according to any preceding claim, **characterized in that** the first generator (218) delivers a power of 150 kW when it is connected to the taxiing network.

7. A device according to any preceding claim, **characterized in that** the second generator (216) delivers electrical power lying in the range 30 kVA to 40 kVA, and a voltage Vac1 of 115 Vac at 400 Hz.

8. A method of electrically powering an aircraft on the ground by means of a device (210) according to any preceding claim, the method being **characterized in that** it comprises a step consisting in powering the taxiing network (214) by the first generator (218) and the aircraft network (212) by means of the second generator (216), and a step consisting in powering the aircraft network (212) by means of the first generator (218) when the taxiing function is not in use, the second generator (216) then not being used.

9. A method according to claim 8, **characterized in that** the first generator (218) is a three-stage synchronous generator with wound rotor excitation, and **in that** the excitation of this generator is controlled by an electronic power unit (232) for switching between a AC voltage second generator of (Vac1) to a first AC voltage generator of (Vac2), the output voltage of the second generator being higher than the output voltage of the first generator, or from a power generator (P) to a first AC voltage generator (Vac2).
